(19) Europäisches Patentamt
European Patent Office
Office européen des brevets

(11) EP 1 026 808 A1

(12) **DEMANDE DE BREVET EUROPEEN**

(43) Date de publication:
**09.08.2000 Bulletin 2000/32**

(51) Int Cl.[7]: **H02J 13/00**

(21) Numéro de dépôt: **00870011.4**

(22) Date de dépôt: **01.02.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **01.02.1999 BE 9900060**

(71) Demandeur: **Leonard, Daniel**
**4000 Liège (BE)**

(72) Inventeur: **Leonard, Daniel**
**4000 Liège (BE)**

(74) Mandataire: **Colens, Alain**
**c/o Bureau Colens SPRL**
**rue Franz Merjay 21**
**1050 Bruxelles (BE)**

# (54) Récepteur sécurisé d'ordres de télécommande centralisée, dispositif émetteur associés et procédé mis en oeuvre

(57) L'invention concerne un dispositif émetteur d'ordres de télécommande centralisée permettant de générer des ordres localement afin de vérifier le bon fonctionnement des récepteurs installés. L'émission d'un ordre se réalise en commutant une charge de puissance sur un réseau électrique à un rythme égal ou sous multiple de la fréquence nominale du système de télécommande plus ou moins la fréquence du réseau cette commutation étant activée pendant les bits 1 du message à transmettre et désactivée pendant les bits 0. Une fonction d'identification de l'émetteur est réalisée au moyen d'un sous codage basé sur le choix du signe plus ou moins. L'invention concerne également un dispositif récepteur sécurisé d'ordres de télécommande centralisée permettant d'éviter les fraudes rendues possibles par l'utilisation indélicate de l'émetteur décrit ci-dessus et comprenant soit un filtre centré sur la fréquence nominale du système de télécommande et deux autres filtres centrés respectivement sur la fréquence nominale moins deux fois la fréquence secteur et sur la fréquence nominale plus deux fois la fréquence secteur, le filtre central participant à la démodulation des ordres, les filtres latéraux étant utilisés pour vérifier la technique utilisée pour générer les ordres, soit un algorithme de traitement de signal destiné à mettre en évidence le spectre du dispositif émetteur décrit ci-dessus.

EP 1 026 808 A1

## Description

La présente invention concerne un émetteur d'ordres de télécommande centralisée pour réseau de transport ou de distribution d'énergie électrique. Elle vise de plus, un procédé mis en oeuvre dans cet émetteur. Elle vise aussi un dispositif récepteur sécurisé d'ordres de télécommande centralisée pour réseau de transport ou de distribution d'énergie électrique. Elle vise enfin un procédé mis en oeuvre dans ce récepteur.

La télécommande centralisée est un système de commande à distance pour réseau électrique permettant la manoeuvre simultanée d'un grand nombre de récepteurs à partir d'un point central. Ces récepteurs peuvent être par exemple associés à des compteurs électriques permettant l'application de différents tarifs selon les plages horaires de la consommation, par exemple jour-nuit.

Le signal généralement utilisé à cette fin est une tension à fréquence audio superposée à la fréquence du réseau. Cette tension est codée soit sous forme d'impulsions "tout ou rien" soit au moyen d'une modulation de fréquence ou de phase et elle permet l'exécution d'un grand nombre de fonctions différentes en faisant correspondre à chaque fonction un code différent. Généralement, la transmission des signaux est unidirectionnelle, dans le sens fournisseur vers client; il n'y a donc pas de vérification possible par le fournisseur des messages reçus par le client. On attend d'un récepteur sécurisé d'ordres de télécommande centralisée, qu'il ne détecte que les ordres émis intentionnellement par l'exploitant du réseau électrique et qu'il soit insensible à des ordres émis frauduleusement par l'abonné lui même. La sécurité du système réside donc d'une part dans la connaissance du code et surtout dans l'impossibilité supposée d'une injection locale simple et peu coûteuse de messages frauduleux, impossibilité qui n'est effective que si la fréquence audio susmentionnée est prise suffisamment basse (quelques centaines de Hz).

On connaît par le document US Patent 5,691,715, une méthode de sécurisation et de détection de fraude basée sur l'analyse des adresses source et destination des messages bidirectionnels échangés sur un réseau de distribution électrique. Cette méthode n'est toutefois pas applicable aux réseaux utilisant des systèmes de télécommande à transmission unidirectionnelle, dans lesquelles les notions d'adresse source et destination sont inexistantes.

Un des buts de la présente invention est de proposer un procédé simple et original permettant d'injecter en un point quelconque d'un réseau électrique des ordres de télécommande centralisée capables d'agir sur les récepteurs de télécommande centralisée installés actuellement dans plusieurs pays, notamment au niveau des compteurs de consommation électrique, et de proposer une application et une réalisation possible d'un émetteur basé sur ce procédé. Le principe utilisé par les émetteurs classiques de télécommande centralisée installés dans les postes à haute tension des sociétés de distribution d'énergie électrique, est de superposer à la tension du secteur à 50 ou 60 Hz (la fréquence du secteur sera notée F1 dans la suite du texte) produite par la centrale électrique, une fréquence audio porteuse (appelée F3 dans la suite du texte) modulée en amplitude par tout ou rien (la modulation peut être aussi en fréquence ou en phase) au moyen d'un code (séquence d'un nombre donné de positions d'impulsions ayant une durée de cycle spécifiée). Le code caractérise la télécommande à envoyer. La valeur de la fréquence porteuse F3, le nombre et la durée des impulsions possibles, varient d'un constructeur à l'autre.

La présente invention présente deux aspects; le premier aspect concerne un dispositif émetteur d'ordres de télécommande centralisée dont le principe de fonctionnement est de commuter une charge de puissance sur un réseau électrique à une fréquence choisie en fonction du procédé de modulation utilisé et du message à transmettre, cette commutation étant activée ou non en fonction du procédé de modulation utilisé et du message à transmettre. Ce dispositif permet donc d'injecter localement des ordres de télécommande centralisées d'une manière simple, portable et peu coûteuse. Ce dispositif peut donc mettre en péril la sécurité des systèmes de télécommande centralisée installés en de nombreux endroits.

Le deuxième aspect de la présente invention concerne un dispositif récepteur d'ordres de télécommande centralisée, sécurisé en fonction de l'émetteur de la première partie en ce sens qu'il comprend en plus des circuits de démodulation classiques des messages, des circuits ou algorithmes de traitement de signaux destinés à vérifier la technique utilisée pour générer les signaux émis afin de mettre en évidence une génération (frauduleuse ou à des fins de tests) de ces signaux réalisée par le dispositif de la première partie. L'existence de ce nouveau récepteur permet donc d'accroître la sécurité des systèmes de télécommande centralisée.

L'invention est exposée ci-après en détail en se référant aux dessins en annexe présentés à titre d'exemples non limitatifs uniquement dans lesquels :

- la figure 1a schématise un réseau électrique alimentant une habitation. Le point P représente une prise de courant située dans l'habitation. Le dispositif émetteur proposé est schématisé dans un cadre en pointillés,
- la figure 1b montre un exemple de message de télécommande sous la forme d'un signal dénommé. Ce signal C (t) est composé d'une impulsion de démarrage suivie de n impulsions dont la valeur peut être 0 ou 1. Le code est la suite des numéros d'impulsions qui valent 1.
- la figure 1c illustre le signal S(t) qui est un signal carré à la fréquence F2,
- la figure 2 schématise le dispositif émetteur local,

- la figure 3 montre un exemple de réalisation du récepteur sécurisé en technologie analogique,
- la figure 4 illustre une réalisation similaire en technologie numérique,
- la figure 5 montre le signal de sortie d'un filtre analogique
- la figure 6 montre le résultat d'une analyse FFT.

Dans le système émetteur proposé (premier but de l'invention), le procédé original employé pour injecter des impulsions de télécommande centralisée est décrit à la figure 1a. Dans cette figure, on a symbolisé un réseau monophasé et on a supposé que le procédé de modulation était de la modulation d'amplitude par tout ou rien. Le même procédé peut être employé pour un réseau triphasé. Il suffit alors de tripler le dispositif.

Un procédé très semblable peut être employé pour de la modulation de fréquence ou de phase.

Dans la figure 1a, A.cos(2.π.F1.t) et Z1 représentent respectivement la force électromotrice et l'impédance du réseau électrique vues du point d'accès P. A représente l'amplitude crête de la tension, F1 est la fréquence du réseau (50 ou 60 Hz). Le point d'accès P peut être par exemple une prise de courant située dans une habitation. I1,I2 et R2 schématisent le procédé d'émission proposé. L'interrupteur I1 est fermé lorsque le message à émettre C(t) vaut 1 et il est ouvert lorsque le message à émettre C(t) vaut 0 (voir figure 1b). L'interrupteur I2 est fermé lorsque le signal carré S(t) à la fréquence F2 vaut 1; il est ouvert lorsque ce signal S(t) vaut 0 (voir figure 1c).

La fréquence F2 est la fréquence d'un oscillateur proposé pour l'invention. On peut démontrer qu'au moyen du schéma de la figure 1a et grâce au choix judicieux de la fréquence F2, il est possible d'injecter localement (par exemple au point P de la figure 1a) des ordres de télécommande centralisée auxquels seront sensibles les récepteurs installés actuellement en de nombreux endroits (récepteur pour modulation d'amplitude par tout ou rien). En effet, la tension au point P peut s'écrire:

$$V_P = A.\cos(2.\pi.F1.t).\left[1-\left(\frac{Z1}{Z1+R2}\right).S(t).C(t)\right] \qquad (1)$$

Si on décompose le signal S(t) en série de Fourier, on obtient:

$$S(t) = 2.\alpha.\left[\begin{array}{l}\frac{1}{2}+\frac{\sin(\alpha.\pi)}{\alpha.\pi}.\cos(2.\pi.F2.t-\alpha.\pi)+..\\ \ldots+\frac{\sin(n.\alpha.\pi)}{n.\alpha.\pi}.\cos(2.\pi.n.F2.t-n.\alpha.\pi)\end{array}\right] \qquad (2)$$

a étant le rapport cyclique du signal S(t) soit le rapport θ/T avec T=1/F2 et θ le temps pendant lequel, durant la période T, le signal est à 1.

En combinant les deux relations précédentes, on constate que la tension en P contient des termes dont la fréquence vaut n.F2 ± F1 et dont l'amplitude est de la forme Kn.C(t).

Chacun de ces termes est donc modulé en tout ou rien par le message C(t) Par conséquent, si la fréquence de l'un de ces termes correspond à la fréquence nominale F3 d'un récepteur classique utilisé dans un compteur électrique multi-tarifs par exemple, ce dernier sera actionné en cas d'amplitude suffisante et de concordance de code.

A titre d'exemple, considérons un réseau électrique 50Hz (F1=50Hz) équipé d'un système classique de télécommande centralisée utilisant une porteuse à la fréquence F3 de 283.3 Hz . Pour que le dispositif émetteur proposé injecte à la fréquence F3, il suffit de choisir F2=(F3±F1)/n, n étant un entier positif. En particulier pour n=1: F2=F3±F1, soit F2=233 ou 333 Hz; on constate qu'il y a deux possibilités pour F2: la fréquence supérieure et la fréquence inférieure. Le choix à priori quelconque de l'une de ces deux fréquences, pourra être utilisé utilement comme moyen de codage supplémentaire comme cela sera montré plus loin.

Dans une forme pratique de réalisation, le dispositif émetteur peut être réalisé conformément à la figure 2. Les deux bornes B1 et B2 constituent l'entrée du dispositif. Elles doivent être connectées au réseau électrique, par exemple au point P de la figure 1a. La résistance R2 de la figure 2 est équivalente à la résistance R2 de la figure 1a. La valeur typique de R2 est entre 10 et 50 Ω. Les interrupteurs I1 et I2 de la figure 1a sont réalisés dans le schéma

de la figure 2 par les composants D1,D2,D3,D4 (diodes) T1 (transistor) et P1 (porte ET). Le lecteur vérifiera facilement que si C(t) et S(t) valent 1 simultanément, le transistor T1 conduit et tout se passe (aux imperfections des composants près) comme si la résistance R2 était connectée directement aux bornes B1 et B2. Par contre si l'un des deux signaux S(t) ou C(t) vaut 0, le transistor T1 cesse de conduire et ce cas correspond à l'ouverture de l'un des deux interrupteurs de la figure 1a. Pour le transistor T1, on choisira avantageusement un IGBT bien que un autre type de transistor (par exemple MOS ou bipolaire) puisse convenir.

Le rôle des diodes D1,D2,D3,D4 est de rendre bidirectionnel le transistor T1. On aurait pu de manière équivalente, choisir dès le départ, un dispositif semi-conducteur bidirectionnel. L'oscillateur O1, génère le signal carré S (t) à la fréquence F2. Plusieurs type d'oscillateur peuvent convenir par exemple à quartz, à résonateur céramique, à résonateur mécanique, à résonateur L-C etc.. . Le micro-contrôleur M1 permet de générer le message C(t) à émettre. D'autres technologies que le micro-contrôleur pourraient être utilisées pour réaliser cette fonction comme par exemple de la logique câblée ou de la logique programmable. L'alimentation A1 est une alimentation du type AC-DC, de faible puissance, qui sert uniquement à fournir une tension continue destinée à alimenter P1, O1 et M1.

Comme application du dispositif émetteur décrit ci-dessus, on peut citer par exemple, un appareil de test portable permettant aux exploitants de réseau électrique de vérifier par injection locale le bon fonctionnement des compteurs multi-tarifs classiques ou de tous les récepteurs classiques de télécommande centralisée installés dans le réseau.

A titre de premier exemple pratique, considérons une réalisation de l'émetteur de test de la figure 2. Dans cet exemple la modulation est de l'AM. La résistance R2 est comprise entre 10 et 50 Ω. L'oscillateur O1 est réalisé avec un microcontrôleur PIC16C54 de Microchip générant grâce à des routines de délai, un signal carré S(t) à la fréquence F2 sur l'une de ses I/O, tandis que le microcontrôleur M1 est un 16C57.

Dans cet exemple, la fréquence F3 du système de télécommande est de 283Hz et le secteur est de 50Hz. Il y a donc deux choix possibles équivalents pour la fréquence F2: (283-50) Hz ou (283+50) Hz (pour ces calculs on peut utiliser la valeur mesurée de la fréquence secteur au lieu de la valeur 50; de même la durée des impulsions émise peut être élaborée à partir de cette valeur mesurée ce qui assure une synchronisation de l'émetteur sur la fréquence du secteur).

L'émetteur de test utilise un sous codage consistant à affecter la valeur 1 à la fréquence de 333Hz et la valeur 0 à la fréquence de 233Hz. Ceci permet en plus du code de télécommande, de transmettre un sous code identifiant l'émetteur de test lui même.

Afin d'expliquer le sous-codage, considérons que le message principal soit par exemple composé de l'impulsion de démarrage, des impulsions 1,3,4,17,25 et que le sous-code soit 10101101: dans ces conditions, les impulsions transmises à 333Hz seront: l'impulsion de démarrage, la 3, la 17 et la 25; les impulsions transmises à 233 Hz seront la 1 et la 4.

A titre de second exemple pratique, considérons un système de télécommande centralisée à modulation de fréquence dont la fréquence centrale est de 283 Hz et la déviation de fréquence de ±5 Hz; la fréquence du réseau est de 50 Hz. Le schéma de l'émetteur est celui de la figure 2 modifié de la manière suivante:

- Le signal C(t) vaut 1 pendant toute la durée du message à émettre et vaut 0 ailleurs.
- L'oscillateur O1 à la fréquence F2 est modulé en fréquence par le message à émettre si la fréquence F2 vaut 233 Hz et par le message à émettre inversé si la fréquence F2 vaut 333 Hz.

Le reste de la réalisation est identique.

On notera cependant que si le dispositif émetteur proposé ci-dessus peut être utilisé pour réaliser un appareil de test, il peut être aussi utilisé à des fins frauduleuses.

En effet dans l'exemple de télécommande à but de tarification de consommation électrique, un abonné au réseau électrique disposant d'un tel émetteur peut par exemple à tout moment envoyer les ordres qui correspondent au tarif le plus avantageux. Il peut aussi attendre une période de tarification avantageuse puis grâce à l'émetteur proposé brouiller tous les messages émis par son distributeur d'électricité puisque la transmission est unidirectionnelle et qu'il n'y a pas de vérification possible de bonne réception par le distributeur d'électricité; de la sorte, son compteur restera indéfiniment sur le tarif le plus avantageux.

Ces deux exemples montrent l'intérêt de proposer un récepteur insensible aux signaux émis par l'émetteur proposé.

Le principe utilisé par les récepteurs classiques installés actuellement dans les réseaux consiste à démoduler le signal reçu à la fréquence porteuse du système de télécommande centralisée (F3). Cette opération est suivie d'une comparaison entre le code reçu et le code préalablement programmé dans le récepteur. La sécurité de ces systèmes classiques réside donc d'une part dans la connaissance du code et surtout dans l'impossibilité supposée d'une injection locale simple et peu coûteuse de messages frauduleux, impossibilité qui suite à l'émetteur décrit dans ce brevet, n'existe plus.

On attend d'un récepteur sécurisé d'ordres de télécommande centralisée, qu'il ne détecte que les ordres émis intentionnellement par l'exploitant du réseau électrique et qu'il soit insensible à des ordres émis frauduleusement par l'abonné lui même.

Le second but de la présente invention est de proposer un procédé de réalisation d'un nouveau récepteur, adapté à l'émetteur décrit dans la première partie de l'invention, conçu pour fonctionner en toute sécurité malgré la possibilité d'injection locale de messages frauduleux liée à l'existence de l'émetteur décrit dans la première partie de l'invention. Le principe de ce nouveau récepteur est basé sur l'analyse spectrale détaillée des signaux reçus. En particulier le principe de ce nouveau récepteur n'est pas basé sur une notion d'adresse qui dans la plupart des systèmes européens est inexistante.

Le problème se résume donc à réaliser un récepteur de télécommande centralisée utilisant une fréquence de travail F3, qui placé en un point P comme celui de la figure 1a, ne serait pas sensible au dispositif émetteur proposé et décrit à la figure 2, même en cas de concordance de code et de fréquence, soit pour ce dernier point, dans le cas ou la relation $F2=(F3\pm F1)/n$ serait vérifiée. Un bloc diagramme possible d'un tel récepteur est montré à la figure 3. Après mise en forme, le signal d'entrée (par exemple le signal du point P de la figure 1a) est appliqué à l'entrée de trois filtre passe bande centré respectivement sur les fréquences F3-2F1, F3, F3+2F1. Ces trois filtres sont suivis de trois détecteurs d'amplitude si le système de télécommande utilise la modulation d'amplitude, de trois discriminateurs si la modulation de fréquence est utilisée ou de trois comparateur de phase si la modulation de phase est utilisée. Les sorties des trois démodulateurs sont soumises à un organe de comparaison, de décision et d'utilisation.

Le principe de ce récepteur selon l'invention est basé sur les deux cas possibles décrits ci dessous:

1. le signal d'entrée a été généré par le dispositif émetteur décrit à la figure 2. Dans ces conditions, le signal au point P de la figure 1a est donné par les relations (1) et (2) susmentionnées. On en déduit que s'il y a une composante spectrale à la fréquence F3=n.F2+F1, il y en a une aussi à la fréquence n.F2-F1 soit à la fréquence F3-2.F1. De la même manière, s'il y a une composante spectrale à la fréquence F3=n.F2-F1, il y en a une aussi à la fréquence n.F2+F1 soit à la fréquence F3+2.F1.
2. le signal d'entrée a été généré par l'exploitant du réseau: dans ces conditions, le signal d'entrée ne contient que des composantes centrées sur F3.

Un principe possible pour un récepteur sécurisé est donc le suivant: si l'organe de démodulation, de comparaison et de décision détecte à la sortie du filtre centré sur F3 un code valide et que le même code valide se retrouve à la sortie d'un organe similaire placé à la sortie du filtre centré soit sur F3-2.F1 soit sur F3+2.F1, alors le signal a été généré localement par un dispositif émetteur semblable à celui proposé à la figure 2 soit à des fins de test, soit frauduleusement. Par contre, si l'organe de démodulation de comparaison et de décision ne détecte un code valide qu'à la sortie du filtre centré sur F3, alors le signal n'a pas été généré localement.

D'une manière plus générale, le signal au point P de la figure 1a contient des composantes aux fréquences $n.F2\pm F1$. L'une de celles-ci, pour n=n1 et pour le signe + ou - correspond à F3. On a donc $F3=n1.F2\pm F1$ soit

$$F_2 = \frac{F3 \mp F1}{n1}$$

Le signal en P de la figure 1a contient donc des composantes aux fréquences

$$n.\left(\frac{F3 \mp F1}{n1}\right) \pm F1 \qquad (3)$$

Un principe plus général appliqué pour la conception du récepteur sécurisé selon l'invention est donc le suivant: en cas de réception d'un message sur la fréquence F3, fréquence centrale du système de télécommande centralisée, le récepteur sécurisé doit analyser le contenu spectral du signal reçu. S'il ne trouve qu'une composante modulée à la fréquence F3, le message n'a pas été généré localement par un dispositif semblable à celui de la figure 1a. Si par contre, il retrouve une ou des composantes spectrales modulées par le même message que celui reçu sur la fréquence F3, à des fréquences précisées par la relation (3), alors le message a été généré localement.

Selon une forme pratique de réalisation, le dispositif de récepteur sécurisé peut être réalisé soit en utilisant une technologie de traitement analogique du signal, soit en utilisant une technologie de traitement numérique du signal. Dans les deux technologies, le bloc de mise en forme assure l'interface entre l'entrée connectée au secteur et les circuits de traitement. Ceci peut comprendre une mise à niveau du signal d'entrée avec un éventuel filtrage passe haut. Des protections contre les surtensions peuvent également être introduites.

En appliquant une technologie de traitement analogique du signal, il y a beaucoup de manière de réaliser pratiquement les trois filtres passe bande. On peut utiliser des filtres passe bande passifs. On peut aussi avantageusement, utiliser des filtres passe bande actifs. Parmi ces derniers, on peut citer de manière non exhaustive les technologies suivantes: MFB (multiple feed back), VCVS (voltage controlled voltage source), STATE VARIABLE, BIQUAD, Switched Capacitor Filter etc.. Pour la réalisations des détecteurs d'amplitude (cas de la démodulation AM), plusieurs techniques sont également utilisables. On peut par exemple utiliser de simples diodes; on peut également y adjoindre des amplificateurs opérationnels afin d'augmenter la précision des détecteurs. L'organe de comparaison, de décision et d'utilisation peut lui aussi être réalisé de plusieurs manières. Il peut être réalisé en logique câblée. Il peut aussi être avantageusement réalisé en utilisant un micro contrôleur.

Le code de référence peut être mémorisé par exemple en EPROM, en flash EPROM, en EEPROM, à moins qu'il ne le soit au moyen de dip-switchs. L'algorithme de comparaison et de décision peut par exemple être le suivant: le micro-contrôleur échantillonne à une fréquence suffisante les trois sorties des démodulateurs et analyse la concordance entre les codes éventuellement reçus et le code de référence. Si cette concordance est positive pour le filtre centré sur F3 et négative pour les deux autres filtres, alors le micro contrôleur décide d'agir sur les organes de commande de l'utilisation. Ces organes peuvent être par exemple des relais électroniques ou électromécaniques. En option, le micro contrôleur peut vérifier la présence du secteur ainsi que les valeurs et la fréquence de la tension à l'entrée (voir figure 3), ces valeurs devant être comprises dans des tolérances prédéfinies par l'exploitant du réseau électrique.

En appliquant une technologie de traitement numérique du signal, il y a également beaucoup de manière de réaliser le récepteur sécurisé. On peut par exemple utiliser de la logique discrète, des FPGA, des ASIC ect... A titre d'exemple, nous allons décrire une méthode basée sur l'utilisation d'un DSP (digital signal processor) (voir figure 4). Ce DSP dispose en interne d'un ADC 10 bits, de trois counter timer ainsi que de bits I/O. Grâce à cette architecture, le schéma du récepteur sécurisé présenté à la figure 4 est particulièrement simple. On distingue l'alimentation des circuits électroniques et l'étage de mise en forme du signal d'entrée (y compris le filtrage anti repli) . On distingue également l'organe de mémorisation du code de référence (dip-switch, EPROM, flash EPROM, EEPROM ect...). On distingue également les circuits d'interface entre les I/O du DSP et l'utilisation (par exemple relais électroniques ou électromécaniques et circuits associés). On distingue enfin le DSP qui assure l'entièreté du traitement et en particulier (et d'une manière non exhaustive) l'échantillonnage et la conversion analogique numérique, le filtrage passe bande centré sur F3-2.F1, le filtrage passe bande centré sur F3, le filtrage passe bande centré sur F3+2.F1, les trois démodulations et les trois filtres passe bas post démodulation, l'éventuelle mesure de la présence et de la fréquence secteur, la comparaison avec le code de référence, la décision et la commande des interfaces vers l'utilisation. Au lieu d'utiliser des filtres passe bande centrés sur F3-2.F1 et F3+2.F1, le DSP peut aussi utiliser une technique FFT pour mettre en évidence les composantes spectrales dont les fréquences sont précisées par la relation (3).

A titre de premier exemple pratique, considérons un système de télécommande centralisée utilisant une fréquence centrale de 283Hz modulée en amplitude par tout ou rien avec des messages de 100ms de durée d'impulsion (50 impulsions possibles) et une fréquence secteur de 50Hz. Le schéma utilisé est celui de la figure 3. Pour ce premier exemple, on utilise une technologie analogique. Le circuit de mise en forme se compose d'un filtre passe haut de Butterworth d'ordre 2 dont la fréquence de coupure est de 150Hz. Les filtres passe bande centrés sur 183, 283 et 383Hz sont des filtres de Butterworth d'ordre 2. La bande passante à 3 dB de ces filtres est de 12Hz. Le microprocesseur est un 16C57 de Microchip. La figure 5 montre la forme des signaux en sortie du filtre à 283Hz. Les sorties des autres filtres sont semblables. Le microprocesseur échantillonne la sortie des trois filtres à un rythme de 50 échantillons par seconde par exemple. Il compare ensuite les signaux de sortie des trois démodulateurs. S'il ne trouve un message valide que sur le démodulateur central correspondant à F3, le signal reçu a été généré normalement. S'il trouve un message valide sur le démodulateur central et soit sur l'un des deux autres démodulateurs soit sur la somme des sorties des deux autres démodulateurs, le signal a été généré frauduleusement. S'il trouve un message valide sur le démodulateur central et sur la somme des sorties des deux autres démodulateurs chacun de ces derniers contribuant à la somme en conformité avec un sous code connu, le signal a été généré par un appareil de test; dans ce cas, le récepteur de télécommande agit brièvement sur les relais de sortie du récepteur pour en vérifier le bon fonctionnement.

A titre de second exemple pratique, considérons un système de télécommande centralisée utilisant une fréquence centrale de 175Hz modulée en amplitude avec des messages de 1s de durée d'impulsion et une fréquence secteur de 50Hz. Le schéma utilisé est celui de la figure 4. Le système utilise un DSP. Le circuit de mise en forme comprend un filtre coupe bande analogique de Butterworth d'ordre 3 dont les fréquences de coupure sont de 45 et 55 Hz, suivi d'un filtre anti repli à capacités commutées ( MAX7403 de MAXIM) dont la fréquence de coupure est de 310 Hz. La fréquence d'échantillonnage de l'ADC est de 750 Hz. Pour l'algorithme DSP, trois techniques peuvent être utilisées:

Par filtrage IIR: le filtre à 75Hz est un IIR de Butterworth d'ordre 6 dont la largeur à 3dB est de 4Hz. Le filtre à 175Hz et le filtre à 275Hz sont des filtres IIR de Butterworth d'ordre 4 dont la largeur de bande à 3dB est de 10Hz. A titre d'exemple, les coefficients du filtre à 75Hz peuvent être les suivants:

; I A(I,1) A(I,2) B(I,0) B(I,1) B(I,2)
; 1 -1.5908203 0.9858398 0.0092926 0.0000000 -0.0092926
; 2 -1.6201172 0.9863281 0.0196686 0.0000000 -0.0196686
; 3 -1.5947266 0.9716797 0.0201874 0.0000000 -0.0201874

Le filtre à 75 Hz est réalisé par la mise en cascade de trois sections du second ordre. La fonction de transfert globale de c filtre est de la forme:

$$H(z)=\prod_{I=1}^{3}\frac{B(I,0)+B(I,1).z^{-1}+B(I,2).z^{-2}}{1+A(I,1).z^{-1}+A(I,2).z^{-2}}$$

Les filtres à 175 et 275 Hz sont réalisés d'une manière similaire par la mise en cascade de deux sections du second ordre.

Par filtrage FIR: Les filtres passe bande à 75, 175 et 275 Hz sont des filtres FIR à 148 coefficients; ils ont une largeur de bande de 10 Hz.

En utilisant des techniques de traitement de signal plus complexe: un filtre à 175Hz comme ci-dessus est utilisé pour détecter les messages. Pendant la réception d'un message, une FFT est effectuée sur le signal. La figure 6 montre le résultat d'une FFT 1024 points. En comparant la fréquence des raies de la figure 6 avec celles prédites par la formule (3), on peut identifier les caractéristiques du système émetteur. Ainsi pour la figure 6, la fréquence F2 de l'émetteur est de 41.67Hz. Les raies sont situées aux fréquences prédites par la formule (3) à savoir

$$n.\left(\frac{175-50}{3}\right)\pm 50\,\mathrm{Hz}$$

pour n= 1, 2, ...

Après filtrages passe-bande, les traitements effectués sont les suivants: détections d'amplitude, filtrages passe bas de post détection (filtre de Bessel du second ordre avec une fréquence de coupure de 6 Hz) puis traitements sur les trois signaux démodulés identiques à ceux du premier exemple, le DSP effectuant l'ensemble des opérations.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif émetteur d'ordres de télécommande centralisée (1) dont le principe de fonctionnement est de commuter une charge de puissance sur un réseau électrique à une fréquence choisie en fonction du procédé de modulation utilisé et du message à transmettre, cette commutation étant activée ou non en fonction du procédé de modulation utilisé et du message à transmettre, ledit dispositif utilisant comme fréquence de commutation F2 de la charge de puissance sur le réseau électrique une valeur égale ou sous multiple de la somme ou de la différence de la fréquence nominale F3 du système de télécommande centralisée et de la fréquence du réseau F1.

2. Dispositif (1) émetteur tel que décrit dans la revendication 1 caractérisé par le fait que étant configuré en modulation d'amplitude, cette commutation est activée lorsque l'impulsion à transmettre vaut 1 et désactivée lorsque l'impulsion à transmettre vaut 0.

3. Dispositif (1) émetteur tel que décrit dans la revendication 1 caractérisé par le fait que étant configuré en modulation de fréquence ou de phase, ladite fréquence de commutation est en plus modulée en fréquence ou en phase par le message à transmettre ou le message à transmettre inversé, la commutation étant activée pendant toute la durée du message à transmettre et désactivée ensuite.

4. Dispositif émetteur tel que décrit dans les revendications 1 ou 3 dans lequel le message à transmettre module la fréquence de commutation si cette dernière est inférieure à la fréquence nominale du système de télécommande centralisée et dans lequel le message à transmettre inversé module la fréquence de commutation si cette dernière

est supérieure à la fréquence nominale du système de télécommande centralisée.

**5.** Dispositif (1) émetteur tel que décrit dans n'importe laquelle des revendications 1, 2 ou 3 le choix, de la somme ou de la différence étant utilisé par l'émetteur pour transmettre un sous code.

**6.** Dispositif selon n'importe laquelle des revendications 1,2,3 et 5 caractérisé en ce que le sous-code est utilisé comme identification de l'émetteur.

**7.** Procédé d'émission de message de télécommande centralisée sur un réseau électrique à des fins de test, caractérisé en ce qu'il comprend la commutation d'une charge de puissance sur un réseau électrique à un rythme égal ou sous multiple de la fréquence nominale du système de télécommande centralisée plus ou moins la fréquence du réseau, cette commutation étant modulée en fréquence en phase ou en amplitude par le message à transmettre selon que le système de télécommande centralisée fonctionne en FM, PM ou AM.

**8.** Procédé selon la revendication précédente caractérisé en ce que le choix de la somme ou de la différence à l'émission peut être utilisé pour transmettre un sous code pouvant être utilisé comme identification de l' émetteur à moins qu'il ne soit à usage général.

**9.** Dispositif récepteur (3) d'ordres de télécommande centralisée sécurisé en fonction de l'émetteur (1) en ce sens qu'il comprend en plus des circuits de démodulation classiques des messages, des circuits ou algorithmes de traitement de signaux destinés à vérifier la technique utilisée pour générer les signaux émis afin de mettre en évidence une génération (frauduleuse ou à des fins de tests) de ces signaux réalisée par un procédé d'émission selon la revendication 7 ou 8.

**10.** Dispositif (3) récepteur caractérisé en ce que le récepteur non seulement démodule un signal nominal d'un système de télécommande centralisée afin de recevoir le message émis, mais de plus vérifie la présence ou l'absence de composantes spectrales caractéristiques d'un dispositif (1) émetteur selon la revendication 1, ces composantes étant modulées elles aussi par le message émis.

**11.** Dispositif (3) récepteur selon l'une quelconque des revendications 9 et 10 caractérisé en ce qu'il comprend un filtre centré sur la fréquence nominale du système de télécommande et deux autres filtres centrés respectivement sur la fréquence nominale moins deux fois la fréquence secteur et sur la fréquence nominale plus deux fois la fréquence secteur, le filtre central participant à la démodulation des messages, les filtres latéraux étant utilisés pour vérifier la technique utilisée pour émettre ces messages.

**12.** Dispositif (3) récepteur selon l'une quelconque des revendications 9 et 10 caractérisé en ce qu'il implémente des techniques FFT destinées à caractériser finement une éventuelle génération du signal par le procédé d'émission selon une des revendications 7 ou 8.

**13.** Dispositif (3) récepteur selon l'une quelconque des revendications 9,10,11 et 12 caractérisé par le fait que ayant détecté la présence de composantes spectrales propres au procédé d'émission (4) décrit dans la revendication 7 en plus de la composante utile à la fréquence nominale , ledit dispositif n'actionne pas les circuits de sorties qui normalement auraient du l'être en cas de concordance de code et d'amplitude du signal reçu suffisante.

**14.** Dispositif (3) récepteur selon l'une quelconque des revendications précédentes caractérisé en ce que ayant reçu un code valide et un sous code d'identification valide, ledit dispositif actionne de manière transitoire avec retour en position initiale les circuits de sorties qui normalement auraient du l'être de manière permanente, cette action transitoire permettant de tester le bon fonctionnement de l'ensemble.

**15.** Procédé de fonctionnement d'un dispositif selon l'une des revendications 9,10,11,12,13 et 14 caractérisé en ce que les opérations de démodulation et de vérification du code mises en oeuvre dans le dispositif récepteur (3) s'accompagnent de vérifications de l'origine des signaux destinées à valider ces derniers, ces vérifications comprenant les étapes suivantes:

- analyse spectrale des signaux effectuée par filtrage ou par FFT,
- vérification de la présence d'une modulation par le message sur les composantes spectrales découvertes.
- vérification par rapport à la théorie de la fréquence des composantes spectrales découvertes,

caractérisé en ce qu'il comprend, outre les circuits classiques de démodulation de message, des circuits annexe d'analyse du signal agissant sur des circuits de validation de code.

**16.** Procédé de fonctionnement d'un dispositif selon les revendications 11 et 12 caractérisé en ce que les circuits de traitement de signaux peuvent être soit deux filtres, l'un centré sur la fréquence nominale du système de télécommande moins deux fois la fréquence secteur, l'autre centré sur la fréquence nominale plus deux fois la fréquence secteur, soit une analyse FFT.

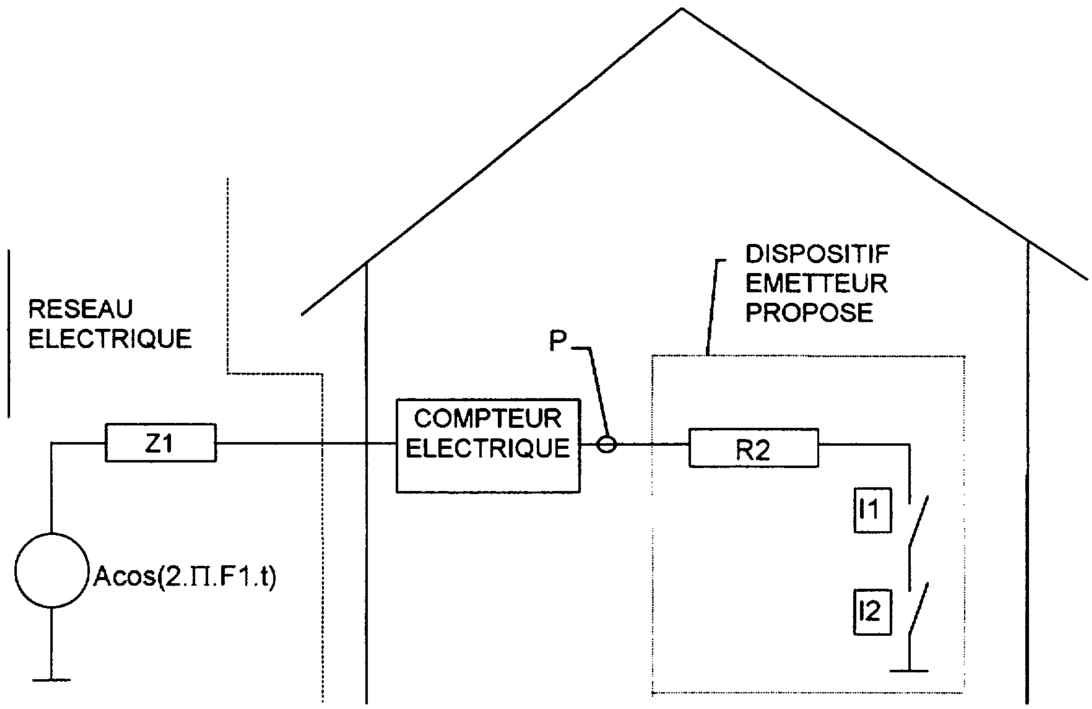


Fig. 1a

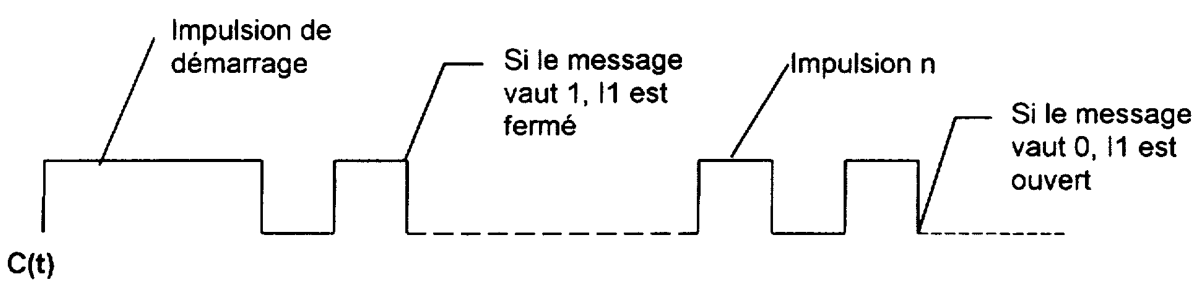


Fig. 1b

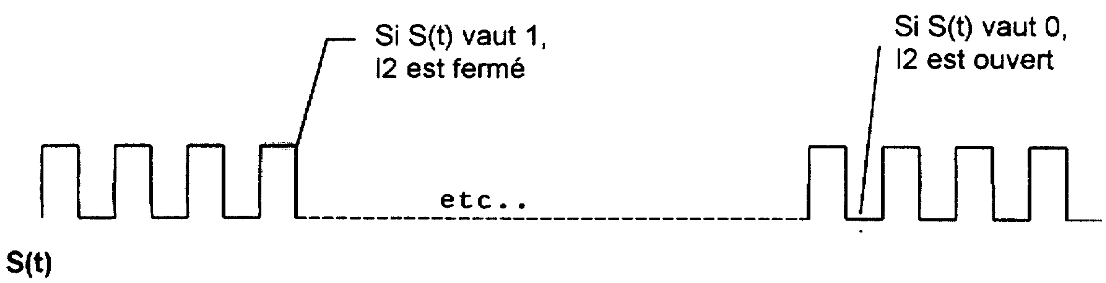


Fig. 1c

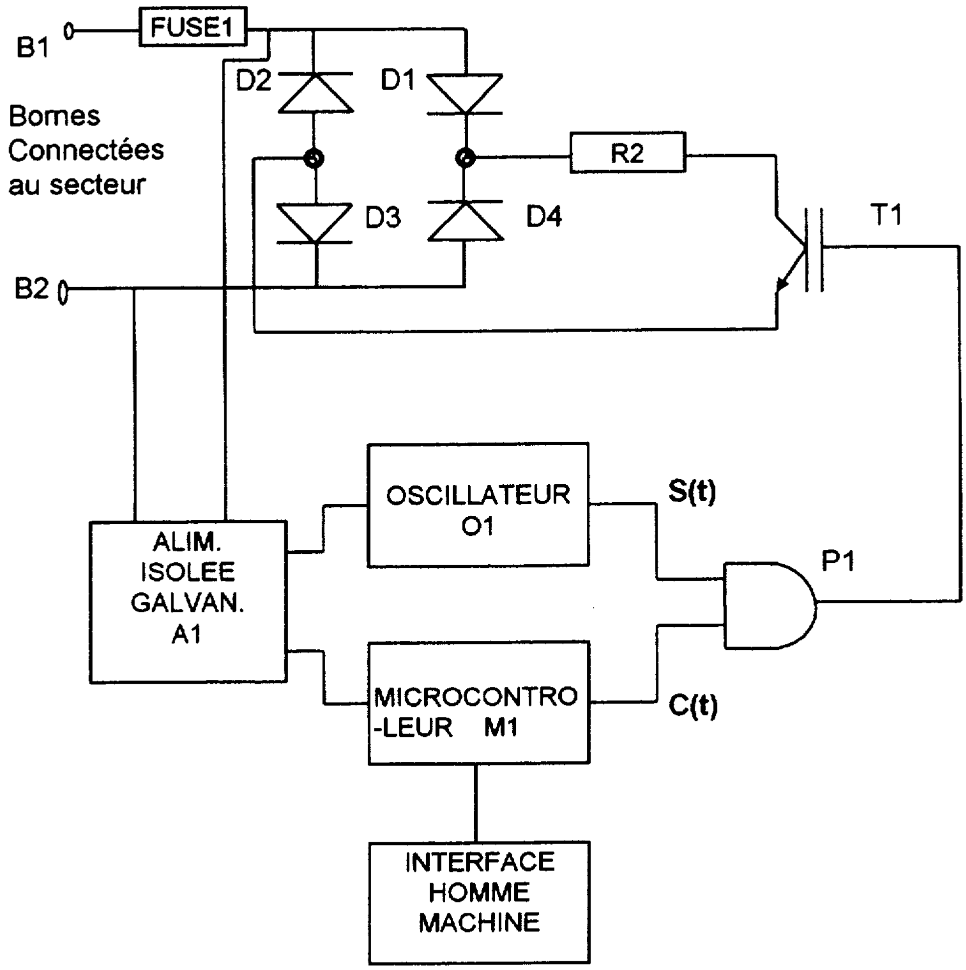


FUSE1 : fusible de protection.
R2 : résistance de puissance ; valeur typique : 10 à 50 Ω.
S(t): signal carré à la fréquence F2
C(t): message à émettre
T1 : IGBT.

**Figure 2 : dispositif émetteur local de test**

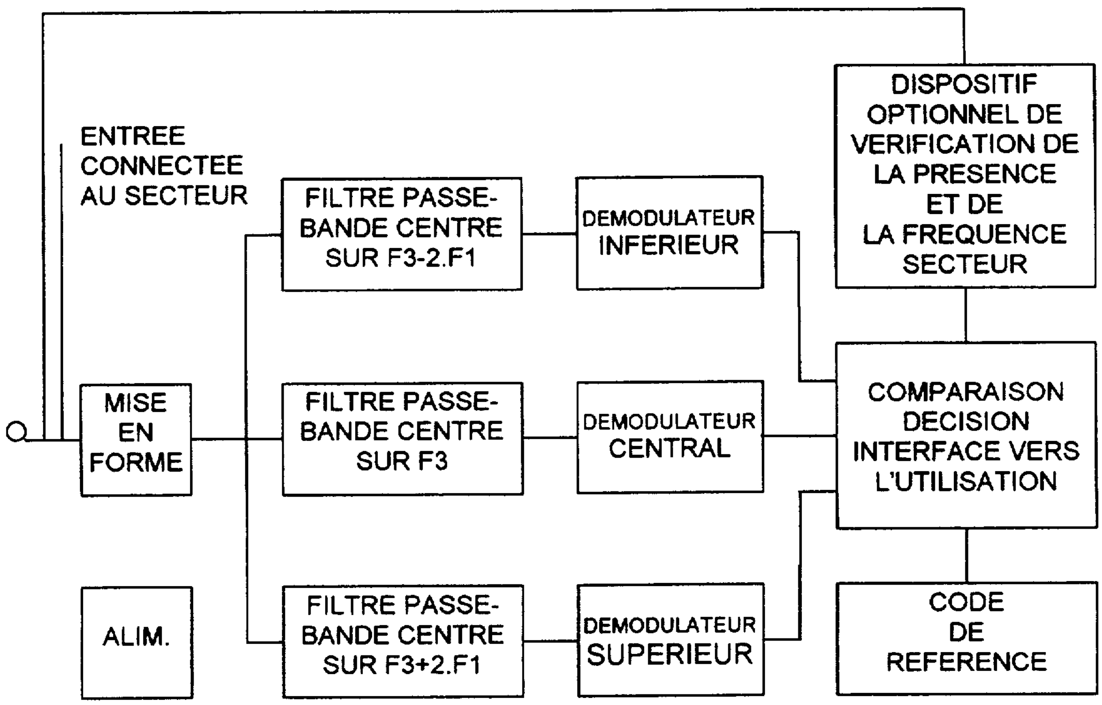


F1 : FREQUENCE DU SECTEUR
F3 :FREQUENCE CENTRALE DU SYSTEME DE TELECOMMANDE CENTRALISEE

**Figure 3 : Exemple de réalisation du récepteur sécurisé en technologie analogique.**

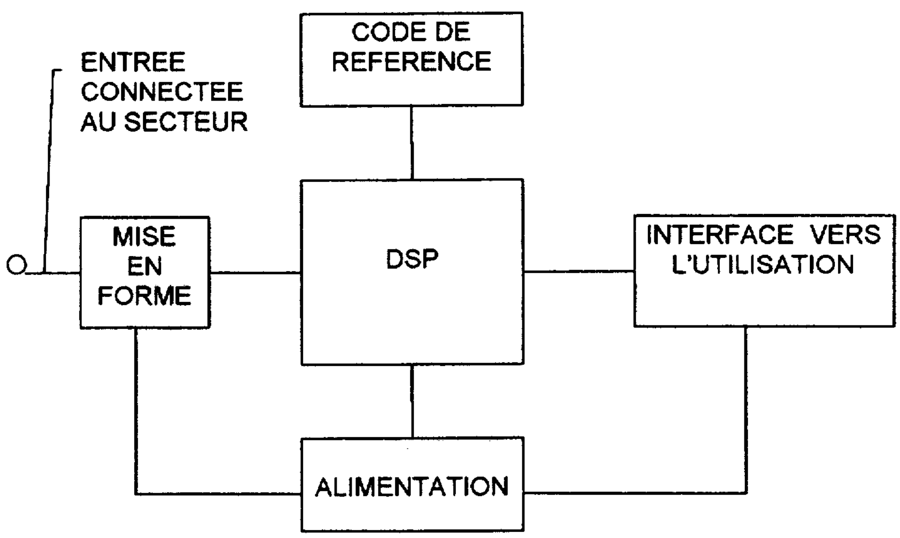


**Figure 4 : Exemple de réalisation du récepteur sécurisé en technologie numérique.**

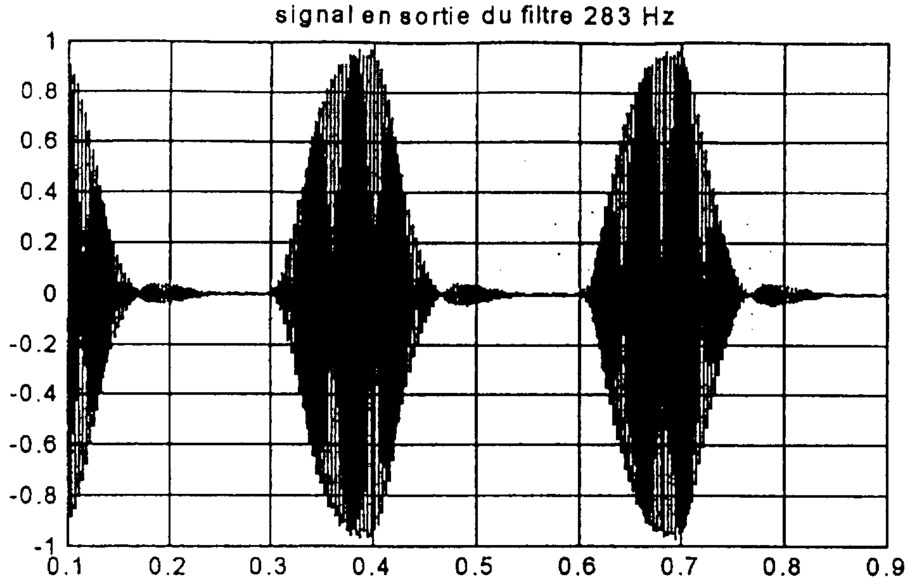


Temps en s
**Figure 5**

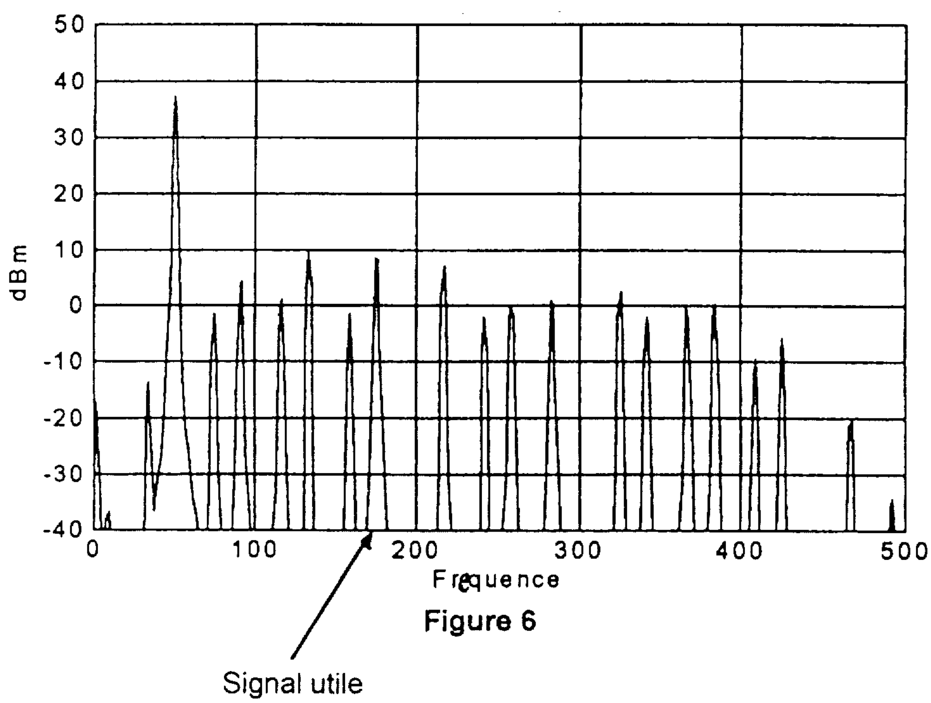


**Figure 6**

Office européen des brevets

# RAPPORT DE RECHERCHE EUROPEENNE

Numéro de la demande
EP 00 87 0011

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int.Cl.7) |
| X | US 4 199 761 A (COOK RICHARD F ET AL) 22 avril 1980 (1980-04-22) * colonne 10, ligne 12 - ligne 38 * --- | 1-3,7,8 | H02J13/00 |
| X | DE 33 47 181 A (SIEMENS AG) 4 juillet 1985 (1985-07-04) * le document en entier * --- | 1,2,7 | |
| X | US 4 737 658 A (KRONMUELLER HEINZ ET AL) 12 avril 1988 (1988-04-12) * colonne 1, ligne 4 - ligne 37 * * colonne 2, ligne 10 - ligne 20 * --- | 1,2 | |
| X | US 4 419 758 A (DOREY HOWARD A) 6 décembre 1983 (1983-12-06) * colonne 3, ligne 57 - ligne 68 * * colonne 6, ligne 1 - ligne 20 * --- | 1,2 | |
| D,A | US 5 691 715 A (OUELLETTE MAURICE JOSEPH) 25 novembre 1997 (1997-11-25) * le document en entier * --- | | DOMAINES TECHNIQUES RECHERCHES (Int.Cl.7) |
| A | US 5 144 280 A (FOORD PETER M) 1 septembre 1992 (1992-09-01) * le document en entier * --- | | H02J |
| A | US 4 361 766 A (DE MONTGOLFIER ARNAUD ET AL) 30 novembre 1982 (1982-11-30) * le document en entier * --- | | |
| A | US 5 184 119 A (STANBURY EVAN J ET AL) 2 février 1993 (1993-02-02) --- | | |
| A | FR 2 750 807 A (APPLICAM) 9 janvier 1998 (1998-01-09) ----- | | |

Le présent rapport a été établi pour toutes les revendications

| Lieu de la recherche | Date d'achèvement de la recherche | Examinateur |
|---|---|---|
| LA HAYE | 12 mai 2000 | Lampe, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 00 87 0011

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-05-2000

| Document brevet cité au rapport de recherche | Date de publication | Membre(s) de la famille de brevet(s) | Date de publication |
|---|---|---|---|
| US 4199761 A | 22-04-1980 | AUCUN | |
| DE 3347181 A | 04-07-1985 | AUCUN | |
| US 4737658 A | 12-04-1988 | DE 3528046 A | 05-02-1987 |
| | | AT 74239 T | 15-04-1992 |
| | | AU 585042 B | 08-06-1989 |
| | | AU 6081186 A | 12-02-1987 |
| | | CN 1007108 B | 07-03-1990 |
| | | DE 3684529 A | 30-04-1992 |
| | | EP 0212307 A | 04-03-1987 |
| | | HU 43440 A,B | 28-10-1987 |
| | | IN 165006 A | 29-07-1989 |
| | | JP 62034424 A | 14-02-1987 |
| | | NZ 216945 A | 28-10-1988 |
| US 4419758 A | 06-12-1983 | AU 6729481 A | 27-08-1981 |
| | | BR 8100947 A | 25-08-1981 |
| | | EP 0034466 A | 26-08-1981 |
| | | GB 2070396 A,B | 03-09-1981 |
| | | GB 2133955 A,B | 01-08-1984 |
| | | JP 56134850 A | 21-10-1981 |
| | | NZ 196231 A | 30-04-1985 |
| | | ZA 8100878 A | 24-02-1982 |
| US 5691715 A | 25-11-1997 | AUCUN | |
| US 5144280 A | 01-09-1992 | CA 1252533 A | 11-04-1989 |
| | | DE 3561036 D | 23-12-1987 |
| | | EP 0159896 A | 30-10-1985 |
| | | JP 60233720 A | 20-11-1985 |
| | | NZ 211797 A | 29-08-1989 |
| | | US 4868539 A | 19-09-1989 |
| US 4361766 A | 30-11-1982 | FR 2468240 A | 30-04-1981 |
| | | BR 8006808 A | 28-04-1981 |
| | | EP 0028178 A | 06-05-1981 |
| | | ES 496183 D | 16-10-1981 |
| | | ES 8200521 A | 16-01-1982 |
| | | JP 56066144 A | 04-06-1981 |
| US 5184119 A | 02-02-1993 | AU 629364 B | 01-10-1992 |
| | | DE 59007111 D | 20-10-1994 |
| | | EP 0407902 A | 16-01-1991 |
| | | HK 38795 A | 24-03-1995 |
| | | SG 17895 G | 16-06-1995 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE RELATIF A LA DEMANDE DE BREVET EUROPEEN NO.** EP 00 87 0011

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-05-2000

| Document brevet cité au rapport de recherche | Date de publication | Membre(s) de la famille de brevet(s) | Date de publication |
|---|---|---|---|
| FR 2750807 A | 09-01-1998 | AUCUN | |

EPO FORM P0460

Pour tout renseignement concernant cette annexe : voir Journal Officiel de l'Office européen des brevets, No.12/82